# EUROPÄISCHE PATENTSCHRIFT

(11) **EP 4 070 417 B1**
(45) Veröffentlichungstag und Bekanntmachung des Hinweises auf die Patenterteilung: **11.12.2024**
(21) Anmeldenummer: 20704398.5
(22) Anmeldetag: 22.01.2020
(51) Int. Cl.: H01R 13/53, H01R 13/74, H02G 15/06, H01R 101/00

(54) **ELEKTRISCHE KOPPELVORRICHTUNG, ELEKTRISCHES SYSTEM UND VERFAHREN ZUM ELEKTRISCHEN SOWIE MECHANISCHEN KOPPELN**
ELECTRICAL COUPLING DEVICE, ELECTRICAL SYSTEM AND ELECTRICAL AND MECHANICAL COUPLING METHOD
DISPOSITIF DE COUPLAGE ÉLECTRIQUE, SYSTÈME ÉLECTRIQUE ET PROCÉDÉ DE COUPLAGE ÉLECTRIQUE ET MÉCANIQUE

(43) Veröffentlichungstag der Anmeldung: 12.10.2022
(73) Patentinhaber: Siemens Energy Global GmbH & Co. KG, 81739 München (DE); Siemens Energy Austria GmbH, 1210 Wien (AT)
(72) Erfinder: BROY, Alexander, 90768 Fürth (DE); GIERING, Gerald Franz, 90562 Kalchreuth (DE); HOLZAPFEL, Johann, 2134 Staatz-Kautendorf (AT); SCHIRRMACHER, Florian, 90427 Nürnberg (DE); WALLNER, Christian, 91058 Erlangen (DE)
(86) Internationale Anmeldenummer: PCT/EP2020/051503
(87) Internationale Veröffentlichungsnummer: WO 2021/148114

(56) Entgegenhaltungen:
- EP-A1- 1 696 517
- EP-A2- 0 193 784
- DE-B3- 102011 078 612

## Beschreibung

Die Erfindung betrifft eine elektrische Koppelvorrichtung zum elektrischen sowie mechanischen Koppeln einer Stromleitungsvorrichtung eines elektrischen Systems mit einer elektrischen Anlage des elektrischen Systems. Ferner betrifft die Erfindung ein elektrisches System mit einer elektrischen Anlage, einer Stromleitungsvorrichtung sowie einer elektrischen Koppelvorrichtung. Schließlich betrifft die Erfindung ein Verfahren zum elektrischen sowie mechanischen Koppeln einer Stromleitungsvorrichtung eines elektrischen Systems mit einer elektrischen Anlage des elektrischen Systems.

Aus der europäischen Patentanmeldung EP 1 696 517 A1 ist eine Vorrichtung zum Stecken von einem Kabel an eine elektrische Anlage im Mittel- oder Hochspannungsbereich gemäß dem Oberbegriff von Anspruch 1 bekannt. Dabei ist ein Steckerteil auf seiner gesamten Länge aus einem elastischen Werkstoff, vorzugsweise aus Silikonkautschuk, hergestellt.

Zur Übertragung von hochtransformiertem Strom sind unterschiedliche Stromleitungsvorrichtungen bekannt. Bekannte Stromleitungsvorrichtungen, insbesondere zur Anordnung an Decken, Wänden, Schächten, Kanälen oder unter Tage, weisen beispielsweise einen flexiblen Stromleiter auf, welcher in einem Rohrinnenraum eines verhältnismäßig steifen Isolationsrohrs angeordnet ist. Derartige Stromleitungsvorrichtungen sind auch unter der Bezeichnung "Power Transmission Conductor" oder in der Kurzform als "PTC" bekannt.

Während der Stromleiter flexibel und somit auf eine Rolle aufspulbar ist, lässt sich das Isolationsrohr zumeist kaum reversibel verformen, sodass ein Aufspulen des Isolationsrohrs auf die Rolle nicht sinnvoll möglich ist. Aus diesem Grund werden Stromleiter und Isolationsrohr üblicherweise erst an der endgültigen Verlegungsstelle zur Stromleitungsvorrichtung zusammengeführt. Der Stromleiter wird zumeist aufgespult auf einer Rolle bereitgestellt, während das Isolationsrohr üblicherweise am Verlegungsort mittels einer hierfür ausgebildeten Vorrichtung, oftmals als Endlosrohr, hergestellt wird. Beim Verlegen wird der Stromleiter von der Rolle abgespult und in den Rohrinnenraum des Isolationsrohrs eingeführt bzw. eingezogen.

Ein großes Problem beim Verlegen derartiger Stromleitungsvorrichtungen ist der Anschluss der Stromleitungsvorrichtung an eine elektrische Anlage, wie beispielsweise eine gasisolierte Schaltanlage bzw. GIS, einen Transformator oder dergleichen. Hierbei müssen mehrere Faktoren berücksichtigt werden. Zunächst ist eine elektrische Verbindung zwischen dem Stromleiter und einem elektrischen Anschluss der elektrischen Anlage herzustellen. Hierbei ist eine ausreichende Absteuerung eines elektrischen Felds des Stromleiters bereitzustellen, insbesondere, um Schäden von der elektrischen Anlage abzuwenden. Überdies ist eine mechanische Verbindung zwischen dem Isolationsrohr und der elektrischen Anlage herzustellen, um die Stromleitungsvorrichtung an der elektrischen Anlage festzusetzen, und um ein Anlagengehäuse der elektrischen Anlage zu einer Umgebung der Anlage hin abzudichten. Dies ist insbesondere bei gasisolierten Schaltanlagen von großer Bedeutung, beispielsweise um eine explosionsgefährdete Umgebung vor Kurzschlussfunken der Schaltanlage zu schützen.

Es ist daher Aufgabe der vorliegenden Erfindung, die voranstehend beschriebenen Nachteile bei einem elektrischen System zu beheben oder zumindest teilweise zu beheben. Insbesondere ist es Aufgabe der vorliegenden Erfindung ein elektrisches System und ein Verfahren zum Koppeln einer Stromleitungsvorrichtung eines elektrischen Systems mit einer elektrischen Anlage des elektrischen Systems zu schaffen, die auf eine einfache und kostengünstige Art und Weise eine elektrische Kopplung und/oder mechanische Kopplung von Stromleitungsvorrichtung und elektrischer Anlage verbessern.

Voranstehende Aufgabe wird durch die Patentansprüche gelöst. Demnach wird die Aufgabe durch eine elektrische Koppelvorrichtung zum elektrischen sowie mechanischen Koppeln einer Stromleitungsvorrichtung eines elektrischen Systems mit einer elektrischen Anlage des elektrischen Systems mit den Merkmalen des unabhängigen Anspruchs 1, durch ein elektrisches System mit den Merkmalen des nebengeordneten Anspruchs 8 sowie durch ein Verfahren zum elektrischen sowie mechanischen Koppeln einer Stromleitungsvorrichtung eines elektrischen Systems mit einer elektrischen Anlage des elektrischen Systems mit den Merkmalen des nebengeordneten Anspruchs 9 gelöst.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen elektrischen Koppelvorrichtung beschrieben sind, selbstverständlich auch im Zusammenhang mit dem erfindungsgemäßen elektrischen System sowie dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine elektrische Koppelvorrichtung zum elektrischen sowie mechanischen Koppeln einer Stromleitungsvorrichtung eines elektrischen Systems mit einer elektrischen Anlage des elektrischen Systems gelöst. Die elektrische Koppelvorrichtung weist eine elektrische Leitervorrichtung mit einem ersten elektrischen Leiterabschnitt zum elektrischen Verbinden mit einem elektrischen Leiterverbindungsabschnitt eines Stromleiters der Stromleitungsvorrichtung sowie einem zweiten elektrischen Leiterabschnitt zum elektrischen Verbinden mit einem elektrischen Anlagenverbindungsabschnitt der elektrischen Anlage auf. Die elektrische Leitervorrichtung weist zum elektrischen Koppeln des ersten elektrischen Leiterabschnitts mit dem zweiten elektrischen Leiterabschnitt einen Verbindungsleiter auf. Ferner weist die elektrische Koppelvorrichtung einen Isolierkonus mit einer zentralen Durchführung auf, wobei ein Teilbereich der elektrischen Leitervorrichtung in der zentralen Durchführung angeordnet ist. Zudem weist die elektrische Koppelvorrichtung eine mechanische Anschlussvorrichtung mit einem ersten mechanischen Verbindungsabschnitt zum mechanischen Verbinden mit einem Rohrverbindungsabschnitt eines Isolationsrohrs der Stromleitungsvorrichtung und einem zweiten mechanischen Verbindungsabschnitt zum mechanischen Verbinden mit einem Gehäuseanbindungsabschnitt eines Anlagengehäuses der elektrischen Anlage auf.

Zum Leiten des elektrischen Stroms zwischen der Stromleitungsvorrichtung und der elektrischen Anlage weist die elektrische Koppelvorrichtung die elektrische Leitervorrichtung auf. Die elektrische Leitervorrichtung weist den Verbindungsleiter auf. Der Verbindungsleiter ist vorzugsweise stabförmig ausgebildet, und weist vorzugsweise einen runden oder ovalen Querschnitt auf. Es kann erfindungsgemäß vorgesehen sein, dass der Verbindungsleiter einen rechteckigen, insbesondere quadratischen, Querschnitt aufweist. Der Verbindungsleiter weist vorzugsweise ein Material mit einer besonders guten elektrischen Leitfähigkeit, wie beispielsweise Kupfer, Aluminium oder dergleichen, auf oder ist aus einem solchen Material gebildet.

An einem ersten Endbereich des Verbindungsleiters ist der erste elektrische Leiterabschnitt angeordnet. Der erste elektrische Leiterabschnitt kann beispielsweise integral mit dem Verbindungsleiter ausgebildet oder als zusätzliches Bauteil der elektrischen Leitervorrichtung am Verbindungsleiter gehalten sein. Vorzugsweise ist der erste elektrische Leiterabschnitt an dem Verbindungsleiter mittels einer Pressverbindung, Klemmverbindung, Schraubverbindung und/oder Schweißverbindung gehalten. Vorzugsweise ist ein Abschnitt des ersten Endbereichs des Verbindungsleiters in eine zentrale Verbindungsleiteraufnahme des ersten elektrischen Leiterabschnitts eingeführt. Es kann erfindungsgemäß vorgesehen sein, dass der erste elektrische Leiterabschnitt drehbar am Verbindungsleiter angeordnet bzw. gehalten ist.

Der erste elektrische Leiterabschnitt ist zum elektrischen Verbinden mit dem elektrischen Leiterverbindungsabschnitt des Stromleiters der Stromleitungsvorrichtung ausgebildet. Hierfür kann der erste elektrische Leiterabschnitt beispielsweise gemäß einer Überwurfmutter mit einem Innengewinde, einer Quetschhülse, einer Schraubklemme zum Klemmen des elektrischen Leiterverbindungsabschnitts oder dergleichen ausgebildet sein. Vorzugsweise weist der erste elektrische Leiterabschnitt ein besonders gut leitendes Material, wie beispielsweise Kupfer, Aluminium oder dergleichen, auf oder ist aus einem solchen Material gebildet. Somit ist eine mechanische sowie eine elektrische Kopplung zwischen der elektrischen Leitervorrichtung und dem Stromleiter leicht herstellbar.

An einem zweiten Endbereich des Verbindungsleiters ist der zweite elektrische Leiterabschnitt angeordnet. Der zweite elektrische Leiterabschnitt kann beispielsweise integral mit dem Verbindungsleiter ausgebildet oder als zusätzliches Bauteil der elektrischen Leitervorrichtung am Verbindungsleiter gehalten sein. Vorzugsweise ist der zweite elektrische Leiterabschnitt an dem Verbindungsleiter mittels einer Pressverbindung, Klemmverbindung, Schraubverbindung und/oder Schweißverbindung gehalten. Vorzugsweise ist ein Abschnitt des zweiten Endbereichs des Verbindungsleiters in eine zentrale Verbindungsleiteraufnahme des zweiten elektrischen Leiterabschnitts eingeführt.

Der zweite elektrische Leiterabschnitt ist zum elektrischen Verbinden mit dem elektrischen Anlagenverbindungsabschnitt der elektrischen Anlage ausgebildet. Hierfür kann der zweite elektrische Leiterabschnitt beispielsweise gemäß einer Überwurfmutter mit einem Innengewinde, einer Quetschhülse, einer Schraubklemme zum Klemmen des elektrischen Anlagenverbindungsabschnitts oder dergleichen ausgebildet sein. Vorzugsweise weist der zweite elektrische Leiterabschnitt ein besonders gut leitendes Material, wie beispielsweise Kupfer, Aluminium oder dergleichen, auf oder ist aus einem solchen Material gebildet. Somit ist eine mechanische sowie eine elektrische Kopplung zwischen der elektrischen Leitervorrichtung und einer Elektrik der elektrischen Anlage leicht herstellbar.

Die elektrische Leitervorrichtung ist zumindest teilweise in der zentralen Durchführung des Isolierkonus angeordnet. Es kann erfindungsgemäß vorgesehen sein, dass der zweite elektrische Leiterabschnitt vollständig innerhalb der zentralen Ausnehmung angeordnet ist. In diesem Fall ist es erfindungsgemäß bevorzugt, dass der zweite elektrische Leiterabschnitt von einer benachbarten Öffnung der zentralen Durchführung beabstandet ist. Somit ist der zweite elektrische Leiterabschnitt vom Isolierkonus, insbesondere radial nach außen, abgeschirmt. Der Durchmesser des Isolierkonus nimmt vom Bereich des zweiten elektrischen Leiterabschnitts in Richtung des ersten elektrischen Leiterabschnitts zu. Der Isolierkonus weist vorzugsweise ein elektrisch nichtleitendes Material, wie beispielsweise einen Thermoplast, insbesondere PP oder PE, auf.

Der erste mechanische Verbindungsabschnitt der mechanischen Anschlussvorrichtung ist zum mechanischen Verbinden mit dem Rohrverbindungsabschnitt des Isolationsrohrs der Stromleitungsvorrichtung ausgebildet. Durch eine solche Verbindung ist die elektrische Koppelvorrichtung an der Stromleitungsvorrichtung fixierbar. Überdies ist durch diese Verbindung vorzugsweise die zentrale Durchführung des Isolierkonus zur Umgebung hin abdichtbar. Der erste mechanische Verbindungsabschnitt ist vorzugsweise ringförmig ausgebildet. Auf diese Weise ist der erste mechanische Verbindungsabschnitt mit einem ringförmigen Rohrverbindungsabschnitt besonders vorteilhaft verbindbar. Alternativ können der erste mechanische Verbindungsabschnitt sowie der Rohrverbindungsabschnitt zueinander komplementäre keilförmige Querschnitte aufweisen. Dies hat den Vorteil, dass eine Anbindungsfläche von elektrischer Koppelvorrichtung und Stromleitungsvorrichtung vergrö-ßert ist.

Unter einem mechanischen Verbinden wird im Rahmen der Erfindung insbesondere ein stoffschlüssiges und/oder formschlüssiges und/oder kraftschlüssiges Verbinden verstanden. Stumpfschweißen, insbesondere Spiegelstumpfschweißen, ist im Rahmen der Erfindung eine mechanische Verbindung. Es ist erfindungsgemäß bevorzugt, dass die mechanische Verbindung fluiddicht, vorzugsweise zumindest wasserdicht, ausgebildet ist.

Der zweite mechanische Verbindungsabschnitt der mechanischen Anschlussvorrichtung ist zum mechanischen Verbinden mit dem Gehäuseanbindungsabschnitt des Anlagengehäuses der elektrischen Anlage ausgebildet. Durch eine solche Verbindung ist die elektrische Koppelvorrichtung an der elektrischen Anlage fixierbar. Überdies ist durch diese Verbindung vorzugsweise ein Gehäuseinnenraum des Anlagengehäuses zur Umgebung hin abdichtbar. Der zweite mechanische Verbindungsabschnitt ist vorzugsweise ringförmig ausgebildet. Auf diese Weise ist der zweite mechanische Verbindungsabschnitt mit einem ringförmigen Gehäuseanbindungsabschnitt besonders vorteilhaft verbindbar.

Eine erfindungsgemäße elektrische Koppelvorrichtung hat gegenüber bekannten Verbindungsarten zwischen Stromleitungsvorrichtungen und elektrischen Anlagen den Vorteil, dass mit einfachen Mitteln sowie auf eine kostengünstige Art und Weise eine mechanische sowie elektrische Kopplung zwischen der Stromleitungsvorrichtung und der elektrischen Anlage herstellbar ist. Die Anzahl manueller Arbeitsschritte zum Verbinden dieser Komponenten ist gegenüber herkömmlichen Anwendungen erheblich reduziert. Hierdurch sind Montageaufwand sowie Montagezeit und somit die Montagekosten deutlich verringert. Überdies hat die erfindungsgemäße elektrische Koppelvorrichtung den Vorteil, dass eine Demontage der Stromleitungsvorrichtung von der elektrischen Anlage wesentlich erleichtert ist.

Gemäß einer bevorzugten Weiterentwicklung der Erfindung kann bei einer elektrischen Koppelvorrichtung vorgesehen sein, dass der erste elektrische Leiterabschnitt ein Gewinde zum Zusammenschrauben mit einem Gegengewinde des elektrischen Leiterverbindungsabschnitts aufweist. Das Gewinde ist vorzugsweise als Innengewinde und das Gegengewinde demnach vorzugsweise als Außengewinde ausgebildet. Es kann erfindungsgemäß vorgesehen sein, dass der erste elektrische Leiterabschnitt als separates Bauteil, insbesondere gemäß einer Überwurfmutter, ausgebildet ist. In diesem Fall ist es bevorzugt, dass der erste elektrische Leiterabschnitt zwei gegenläufige Gewinde und der Verbindungsleiter ein Außengewinde aufweist. Durch Drehen der Überwurfmutter in eine erste Drehrichtung sind der Verbindungsleiter und der Stromleiter aufeinander zu bewegbar und durch Drehen der Überwurfmutter in eine der ersten Drehrichtung entgegengesetzte zweite Drehrichtung sind der Verbindungsleiter und der Stromleiter voneinander weg bewegbar. Alternativ kann der erste elektrische Leiterabschnitt als Presshülse, Schraubklemme oder dergleichen zum Klemmen des Stromleiters ausgebildet sein. Dies hat den Vorteil, dass mit einfachen Mitteln sowie auf eine kostengünstige Art und Weise eine Verbindung zwischen der elektrischen Leitervorrichtung und der Stromleitungsvorrichtung herstellbar ist.

Es ist erfindungsgemäß bevorzugt, dass der zweite elektrische Leiterabschnitt einen Formschlussabschnitt zum formschlüssigen Zusammenstecken mit einem Gegenformschlussabschnitt des elektrischen Anlagenverbindungsabschnitts aufweist. Der Formschlussabschnitt weist vorzugsweise mindestens eine Abkantung, Abschrägung oder dergleichen auf, um ein Zusammenfügen von Formschlussabschnitt und Gegenformschlussabschnitt zu verbessern. Dies hat den Vorteil, dass mit einfachen Mitteln sowie auf eine kostengünstige Art und Weise ein elektrisches Verbinden der elektrischen Leitervorrichtung mit einer Elektrik der elektrischen Anlage verbessert ist.

Weiter bevorzugt ist der Verbindungsleiter über eine Haltevorrichtung am Isolierkonus gehalten. Die Haltevorrichtung ist vorzugsweise ringförmig oder mehreckig, insbesondere achteckig, ausgebildet. Alternativ oder zusätzlich kann die Haltevorrichtung erfindungsgemäß Halteblöcke zum Halten des Verbindungsleiters aufweisen. Die Haltevorrichtung ist vorzugsweise ausgebildet, den Verbindungsleiter radial gegen eine Innenwandung der zentralen Durchführung des Isolierkonus abzustützen. Alternativ oder zusätzlich ist die Haltevorrichtung vorzugsweise ausgebildet, den Verbindungsleiter gegen ein axiales Verschieben in mindestens eine Richtung, vorzugsweise in zwei entgegengesetzte Richtungen, am Isolierkonus zu halten. Dies hat den Vorteil, dass mit einfachen Mitteln sowie auf eine kostengünstige Art und Weise die elektrische Leitervorrichtung am Isolierkonus befestigbar ist.

In einer besonders bevorzugten Ausgestaltung der Erfindung kann bei einer elektrischen Koppelvorrichtung vorgesehen sein, dass der zweite elektrische Leiterabschnitt die zentrale Durchführung verschließt. Dieser Verschluss ist vorzugsweise wasserdicht ausgebildet. Vorzugsweise ist dieser Verschluss fluiddicht ausgebildet. Das bedeutet, dass ein Fluidaustausch zwischen einem Anlageninnenraum der elektrischen Anlage und der zentralen Durchführung des Isolierkonus und somit auch zwischen dem Anlageninnenraum und einem Rohrinnenraum des Isolationsrohrs unterbunden ist. Dies hat den Vorteil, dass mit einfachen Mitteln sowie auf eine kostengünstige Art und Weise eine Abdichtung des Anlageninnenraums sichergestellt ist. Insbesondere in explosionsgefährdeten Umgebungen ist dies von besonderem Vorteil.

Der erste mechanische Verbindungsabschnitt ist zum Verschwei-ßen mit dem Rohrverbindungsabschnitt ausgebildet. Der erste mechanische Verbindungsabschnitt weist demnach ein Material auf oder ist aus einem Material gebildet, welches schweißbar ist. Vorzugsweise entspricht das Material des ersten mechanischen Verbindungsabschnitts einem Material des Rohrverbindungsabschnitts. Das Material ist ein Thermoplast. Ein besonders bevorzugtes Material ist PP oder PE. Vorzugsweise ist der erste mechanische Verbindungsabschnitt zum Verbinden mit dem Rohrverbindungsabschnitt mittels eines für Stumpfschweißprozesses ausgebildet. Hierfür weist der erste mechanische Verbindungsabschnitt vorzugsweise eine ring- sowie plattenförmige Stirnseite als Verbindungsfläche zum Verbinden mit einer entsprechenden Stirnseite des Rohrverbindungsabschnitts auf. Vorzugsweise ist somit eine fluiddichte Schweißverbindung herstellbar, sodass ein Fluidaustausch zwischen dem Rohrinnenraum und der äußeren Umgebung der elektrischen Koppelvorrichtung verhindert ist. Dies hat den Vorteil, dass mit einfachen Mitteln sowie auf eine kostengünstige Art und Weise ein mechanisches Verbinden der elektrischen Koppelvorrichtung mit dem Isolationsrohr verbessert ist.

Gemäß einer bevorzugten Ausführungsform der Erfindung ist der erste mechanische Verbindungsabschnitt integral mit dem Isolierkonus ausgebildet. Somit ist an den Isolierkonus ein Fortsatz ausgebildet, an welchem der erste mechanische Verbindungsabschnitt ausgebildet ist. Isolierkonus und erster mechanischer Verbindungsabschnitt sind somit in einem Prozess gemeinsam herstellbar. Dies hat den Vorteil, dass mit einfachen Mitteln sowie auf eine kostengünstige Art und Weise eine Komplexität der Herstellung der elektrischen Koppelvorrichtung reduziert ist. Überdies ist somit eine Stabilität der elektrischen Koppelvorrichtung verbesserbar.

Besonders bevorzugt ist der zweite mechanische Verbindungsabschnitt zum Anflanschen an einem Gehäuseflansch des Gehäuseanbindungsabschnitts ausgebildet. Hierfür weist der zweite mechanische Verbindungsabschnitt vorzugsweise eine Abwinklung auf, welche mit dem Gehäuseflansch in Kontakt bringbar und an diesem fixierbar ist. Zum Fixieren können mehrere Bohrungen im zweiten mechanischen Verbindungsabschnitt und dem Gehäuseflansch vorgesehen sein, welche jeweils paarweise miteinander fluchtend anordenbar und in welche Schrauben, Bolzen, Bieten oder dergleichen durchführbar sind. Vorzugsweise liegt der zweite mechanische Verbindungsabschnitt an einer Seite, insbesondere einer schrägen Seite, am Isolierkonus an. Dies hat den Vorteil, dass mit einfachen Mitteln sowie auf eine kostengünstige Art und Weise die elektrische Koppelvorrichtung mit der elektrischen Anlage mechanisch verbindbar ist.

Gemäß einem zweiten Aspekt der Erfindung wird die Aufgabe durch ein elektrisches System gelöst. Das elektrische System weist eine elektrische Anlage mit einem elektrischen Anlagenverbindungsabschnitt und einem Anlagengehäuse mit einem Gehäuseanbindungsabschnitt auf. Ferner weist das elektrische System eine Stromleitungsvorrichtung mit einem einen elektrischen Leiterverbindungsabschnitt aufweisenden Stromleiter und einem einen Rohrverbindungsabschnitt, eine Rohrlängsachse und einen Rohrinnenraum aufweisenden Isolationsrohr auf. Der Stromleiter ist im Rohrinnenraum angeordnet. Des Weiteren weist das elektrische System eine erfindungsgemäße elektrische Koppelvorrichtung auf, wobei der erste elektrische Leiterabschnitt der elektrischen Leitervorrichtung der elektrischen Koppelvorrichtung mit dem elektrischen Leiterverbindungsabschnitt elektrisch verbunden ist, und wobei der erste mechanische Verbindungsabschnitt der elektrischen Koppelvorrichtung mit dem Rohrverbindungsabschnitt mechanisch verbunden ist.

Der zweite elektrische Leiterabschnitt der elektrischen Leitervorrichtung der elektrischen Koppelvorrichtung ist vorzugsweise mit dem elektrischen Anlagenverbindungsabschnitt zusammengeführt, beispielsweise zusammengesteckt, und somit mit diesem elektrisch, vorzugsweise auch mechanisch, verbunden. Der zweite mechanische Verbindungsabschnitt der elektrischen Koppelvorrichtung ist vorzugsweise mit dem Gehäuseanbindungsabschnitt mechanisch verbunden. Der Isolierkonus ragt vorzugsweise zumindest teilweise, vorzugsweise mit einem überwiegenden Teil, in das Anlagengehäuse hinein.

Bei dem erfindungsgemäßen elektrischen System ergeben sich sämtliche Vorteile, die bereits zu einer elektrischen Koppelvorrichtung gemäß dem ersten Aspekt der Erfindung beschrieben worden sind. Demnach hat das erfindungsgemäße elektrische System gegenüber herkömmlichen elektrischen Systemen den Vorteil, dass mit einfachen Mitteln sowie auf eine kostengünstige Art und Weise eine mechanische sowie elektrische Kopplung zwischen der Stromleitungsvorrichtung und der elektrischen Anlage herstellbar ist. Die Anzahl manueller Arbeitsschritte zum Verbinden dieser Komponenten ist gegenüber herkömmlichen Anwendungen erheblich reduziert. Hierdurch sind Montageaufwand sowie Montagezeit und somit die Montagekosten deutlich verringert. Überdies hat das erfindungsgemäße elektrische System den Vorteil, dass eine Demontage der Stromleitungsvorrichtung von der elektrischen Anlage wesentlich erleichtert ist.

Gemäß einem dritten Aspekt der Erfindung wird die Aufgabe durch ein Verfahren zum elektrischen sowie mechanischen Koppeln einer Stromleitungsvorrichtung eines elektrischen Systems mit einer elektrischen Anlage des elektrischen Systems gelöst. Das Verfahren weist die folgenden Schritte auf:
- Bereitstellen einer Stromleitungsvorrichtung mit einem einen elektrischen Leiterverbindungsabschnitt aufweisenden Stromleiter und einem einen Rohrverbindungsabschnitt, eine Rohrlängsachse und einen Rohrinnenraum aufweisenden Isolationsrohr, wobei der Stromleiter im Rohrinnenraum angeordnet ist,
- Bereitstellen einer erfindungsgemäßen elektrischen Koppelvorrichtung,
- Zusammenführen und elektrisches Verbinden des ersten elektrischen Leiterabschnitts der elektrischen Leitervorrichtung der elektrischen Koppelvorrichtung mit dem elektrischen Leiterverbindungsabschnitt,
- Zusammenführen und mechanisches Verbinden des ersten mechanischen Verbindungsabschnitts der mechanischen Anschlussvorrichtung der elektrischen Koppelvorrichtung mit dem Rohrverbindungsabschnitt,
- Zusammenführen und elektrisches Verbinden des zweiten elektrischen Leiterabschnitts der elektrischen Leitervorrichtung mit einem in einem Anlagengehäuse der elektrischen Anlage angeordneten elektrischen Anlagenverbindungsabschnitt der elektrischen Anlage, und
- Mechanisches Verbinden des zweiten mechanischen Verbindungsabschnitts der mechanischen Anschlussvorrichtung mit einem Gehäuseanbindungsabschnitt des Anlagengehäuses.

Es kann erfindungsgemäß vorgesehen sein, dass bei der Bereitstellung der Stromleitungsvorrichtung zunächst ein auf eine Rolle aufgespulter Stromleiter und ein separates Isolationsrohr bereitgestellt werden. Der Stromleiter wird in das Isolationsrohr eingezogen. Alternativ kann der Stromleiter bei der Herstellung des Isolationsrohrs in dieses eingebracht werden.

Der erste elektrische Leiterabschnitt der elektrischen Leitervorrichtung der elektrischen Koppelvorrichtung wird mit dem elektrischen Leiterverbindungsabschnitt des Stromleiters zusammengeführt und elektrisch verbunden. Vorzugsweise wird die elektrische Verbindung durch direkten Kontakt dieser Komponenten miteinander hergestellt. Vorzugsweise wird hierbei auch eine mechanische Verbindung zwischen der elektrischen Leitervorrichtung und dem elektrischen Leiterverbindungsabschnitt hergestellt. Dies kann erfindungsgemäß beispielsweise bei einem im Isolationsrohr oder einem außerhalb des Isolationsrohrs angeordneten, vorzugsweise aufgespulten, Stromleiter erfolgen. Das elektrische und mechanische Verbinden kann beispielsweise durch Stecken, Schrauben, Klemmen, Quetschen, Schweißen oder dergleichen erfolgen.

Anschließend wird der erste mechanische Verbindungsabschnitt der mechanischen Anschlussvorrichtung der elektrischen Koppelvorrichtung mit dem Rohrverbindungsabschnitt des Isolationsrohrs zusammengeführt und miteinander mechanisch verbunden. Das mechanische Verbinden erfolgt vorzugsweise durch Schweißen, Kleben oder dergleichen.

Der zweite elektrische Leiterabschnitt der elektrischen Leitervorrichtung wird mit dem elektrischen Anlagenverbindungsabschnitt der elektrischen Anlage zusammengeführt und elektrisch verbunden. Vorzugsweise wird die elektrische Verbindung durch direkten Kontakt dieser Komponenten miteinander hergestellt. Vorzugsweise wird hierbei auch eine mechanische Verbindung zwischen der elektrischen Leitervorrichtung und dem elektrischen Anlagenverbindungsabschnitt hergestellt. Dies erfolgt erfindungsgemäß vorzugsweise, wenn die elektrische Koppelvorrichtung bereits mit der Stromleitungsvorrichtung elektrisch und mechanisch verbunden ist. Das elektrische und mechanische Verbinden kann beispielsweise durch Schrauben, Stecken, Klemmen, Quetschen, Schweißen oder dergleichen erfolgen. Hierbei wird der Isolierkonus der elektrischen Koppelvorrichtung zumindest teilweise in den Anlageninnenraum der elektrischen Anlage eingeführt.

Schließlich wird die elektrische Koppelvorrichtung mit dem Anlagengehäuse der elektrischen Anlage mechanisch verbunden. Dies erfolgt durch mechanisches Verbinden des zweiten mechanischen Verbindungsabschnitts der mechanischen Anschlussvorrichtung mit dem Gehäuseanbindungsabschnitt des Anlagengehäuses. Die Mechanische Verbindung wird vorzugsweise wasserdicht und besonders bevorzugt fluiddicht hergestellt.

Bei dem erfindungsgemäßen Verfahren ergeben sich sämtliche Vorteile, die bereits zu einer elektrischen Koppelvorrichtung gemäß dem ersten Aspekt der Erfindung sowie zur einem elektrischen System gemäß dem zweiten Aspekt der Erfindung beschrieben worden sind. Demnach hat das erfindungsgemäße Verfahren gegenüber herkömmlichen Verfahren den Vorteil, dass mit einfachen Mitteln sowie auf eine kostengünstige Art und Weise eine mechanische sowie elektrische Kopplung zwischen der Stromleitungsvorrichtung und der elektrischen Anlage herstellbar ist. Die Anzahl manueller Arbeitsschritte zum Verbinden dieser Komponenten ist gegenüber herkömmlichen Anwendungen erheblich reduziert. Hierdurch sind Montageaufwand sowie Montagezeit und somit die Montagekosten deutlich verringert. Überdies hat das erfindungsgemäße Verfahren den Vorteil, dass eine Demontage der Stromleitungsvorrichtung von der elektrischen Anlage wesentlich erleichtert ist.

Eine erfindungsgemäße elektrische Koppelvorrichtung, ein erfindungsgemäßes elektrisches System sowie ein erfindungsgemä-ßes Verfahren werden nachfolgend anhand von Zeichnungen näher erläutert.

Es zeigen jeweils schematisch:
- Figur 1: in einer Schnittdarstellung eine elektrische Koppelvorrichtung gemäß einer bevorzugten Ausführungsform mit einer elektrischen Anlage,
- Figur 2: in einer Schnittdarstellung die elektrische Koppelvorrichtung aus Figur 1 mit einer Freiluftdurchführung einer elektrischen Anlage,
- Figur 3: in einer Seitenansicht eine bevorzugte Ausführungsform eines erfindungsgemäßen elektrischen Systems, und
- Figur 4: in einem Ablaufdiagramm eine bevorzugte Ausführungsform eines erfindungsgemäßen Verfahrens.

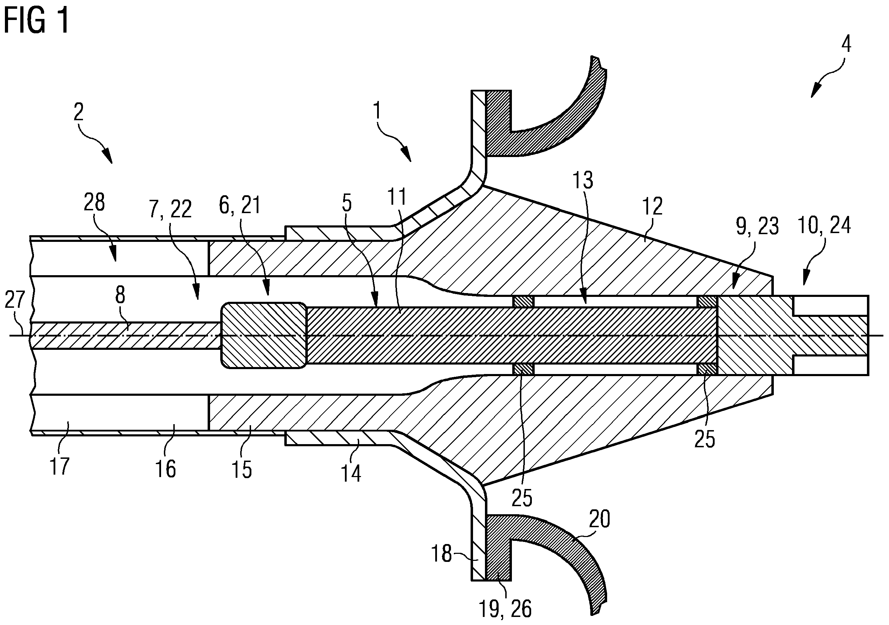

Elemente mit gleicher Funktion und Wirkungsweise sind in den Figuren 1 bis 4 jeweils mit denselben Bezugszeichen versehen.

In Fig. 1 ist eine elektrische Koppelvorrichtung 1 gemäß einer bevorzugten Ausführungsform mit einer ersten elektrischen Anlage 4 schematisch in einer Schnittdarstellung abgebildet. Die elektrische Koppelvorrichtung 1 weist eine elektrische Leitervorrichtung 5 mit einem Verbindungsleiter 11, einem ersten elektrischen Leiterabschnitt 6 und einem zweiten elektrischen Leiterabschnitt 9 auf. Der Verbindungsleiter 11 ist zwischen dem ersten elektrischen Leiterabschnitt 6 und dem zweiten elektrischen Leiterabschnitt 9 angeordnet. Der erste elektrische Leiterabschnitt 6 weist ein Gewinde 21 und der zweite elektrische Leiterabschnitt 9 einen Formschlussabschnitt 23 auf. Ein Teil des Verbindungsleiters 11 ist innerhalb einer zentralen Durchführung 13 eines Isolierkonus 12 der elektrischen Koppelvorrichtung 1 angeordnet und über eine Haltevorrichtung 25 am Isolierkonus 12 abgestützt. Vorzugsweise ist die Haltevorrichtung 25 ausgebildet, ein relatives Verschieben von Verbindungsleiter 11 zum Isolierkonus 12 zumindest in eine Richtung zu begrenzen, in beide Richtungen zu begrenzen oder ein relatives Verschieben zu verhindern. An dem Isolierkonus 12 ist eine mechanische Anschlussvorrichtung 14 der elektrischen Koppelvorrichtung 1 mit einem ersten mechanischen Verbindungsabschnitt 15 und einem zweiten mechanischen Verbindungsabschnitt 18 angeordnet.

Das Gewinde 21 des ersten elektrischen Leiterabschnitts 6 ist als Innengewinde ausgebildet und mit einem als Außengewinde ausgebildeten Gegengewinde 22 eines elektrischen Leiterverbindungsabschnitts 7 eines Stromleiters 8 einer Stromleitungsvorrichtung 2 im Eingriff. Somit sind der Verbindungsleiter 11 und der Stromleiter 8 elektrisch sowie mechanisch miteinander gekoppelt. Der Formschlussabschnitt 23 des zweiten elektrischen Leiterabschnitts 9 ist mit einem Gegenformschlussabschnitt 24 eines elektrischen Anlagenverbindungsabschnitts 10 einer elektrischen Anlage 4 im Eingriff. Somit sind der Verbindungsleiter 11 und eine Elektrik der elektrischen Anlage 4 elektrisch sowie mechanisch miteinander gekoppelt.

Der erste mechanische Verbindungsabschnitt 15 ist mit einem Rohrverbindungsabschnitt 16 eines Isolationsrohrs 17 der Stromleitungsvorrichtung 2 zusammengeschweißt. Auf diese Weise ist die elektrische Koppelvorrichtung 1 mit dem Isolationsrohr 17 mechanisch gekoppelt. Ein Flanschabschnitt des zweiten mechanischen Verbindungsabschnitts 18 ist an einem Gehäuseflansch 26 eines Gehäuseanbindungsabschnitts 19 eines Anlagengehäuses 20 der elektrischen Anlage 4 angeordnet und mit diesem mechanisch verbunden, beispielsweise über eine nicht abgebildete Verschraubung, Clipverbindung oder dergleichen. Vorzugsweise ist am Flanschabschnitt des zweiten mechanischen Verbindungsabschnitts 18 und/oder dem Gehäuseflansch 26 eine nicht dargestellte Dichtungsvorrichtung angeordnet. Der Isolierkonus 12 ist in einen vom Anlagengehäuse 20 umgebenen Anlageninnenraum der elektrischen Anlage 4 eingeführt. Die elektrische Anlage 4 ist beispielsweise als gasisolierter Schaltschrank oder Transformator ausgebildet.

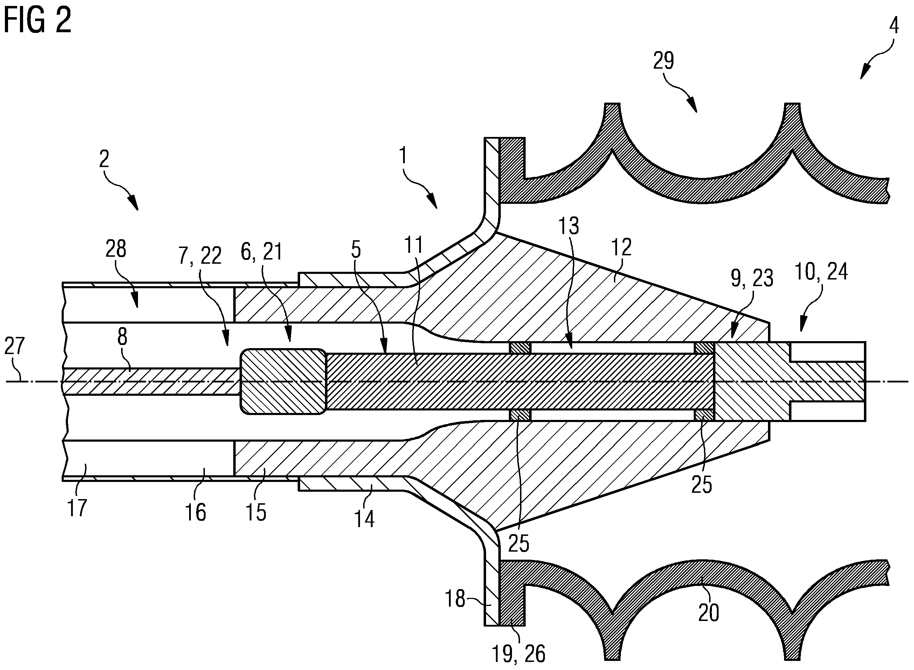

Fig. 2 zeigt die elektrische Koppelvorrichtung 1 aus Fig. 1 mit einer Freiluftdurchführung 29 einer elektrischen Anlage 4 schematisch in einer Schnittdarstellung. Die elektrische Koppelvorrichtung 1 ist über die Freiluftdurchführung 29 mit der elektrischen Anlage 4 elektrisch und mechanisch gekoppelt.

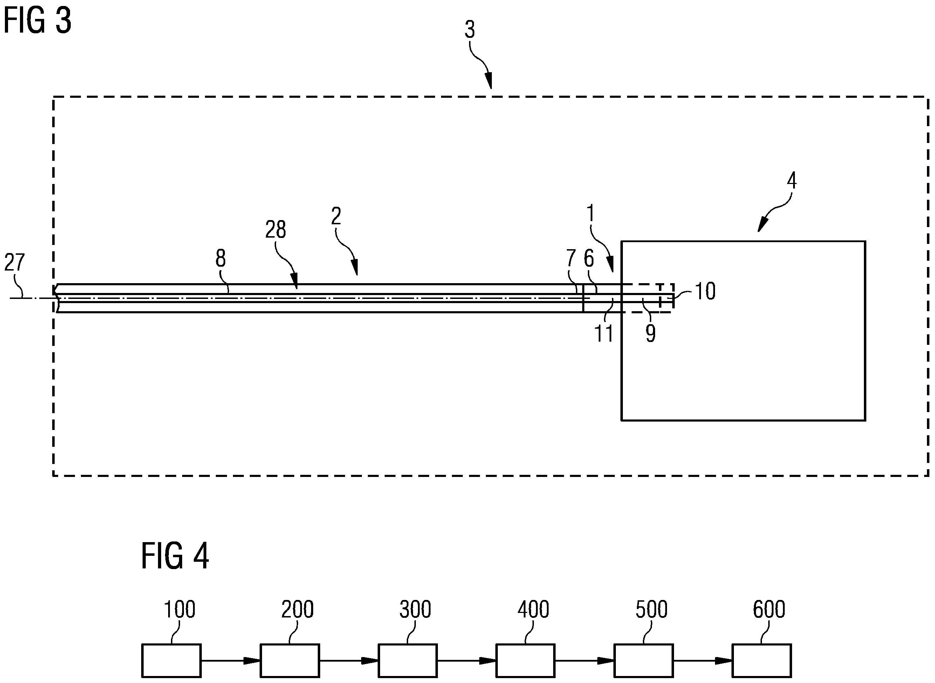

In Fig. 3 ist eine bevorzugte Ausführungsform eines erfindungsgemäßen elektrischen Systems 3 schematisch in einer Seitenansicht dargestellt. Das elektrische System 3 weist eine Stromleitungsvorrichtung 2, eine elektrische Koppelvorrichtung 1 sowie eine elektrische Anlage 4 auf. Ein Stromleiter 8 der Stromleitungsvorrichtung 2 ist über eine elektrische Leitervorrichtung 5 der elektrischen Koppelvorrichtung 1 mit einem elektrischen Anlagenverbindungsabschnitt 10 der elektrischen Anlage 4 elektrisch und mechanisch gekoppelt.

Die Stromleitungsvorrichtung 2 weist Isolationsrohr 17 mit einer eine Rohrlängsachse 27 und einem Rohrinnenraum 28 auf. Der Stromleiter 8 ist im Rohrinnenraum 28 angeordnet. Das Isolationsrohr 17 ist über eine mechanische Anschlussvorrichtung 14 der elektrischen Koppelvorrichtung 1 mit einem Anlagengehäuse 20 der elektrischen Anlage 4 mechanisch gekoppelt. Auf diese Weise ist ein Anlageninnenraum der elektrischen Anlage 4 nach außen abgedichtet. Der Rohrinnenraum 28 ist zur elektrischen Anlage 4 hin abgedichtet.

Fig. 4 zeigt eine bevorzugte Ausführungsform eines erfindungsgemäßen Verfahrens schematisch in einem Ablaufdiagramm. In einem ersten Verfahrensschritt 100 wird eine Stromleitungsvorrichtung 2 mit einem mit einem einen elektrischen Leiterverbindungsabschnitt 7 aufweisenden Stromleiter 8 und einem einen Rohrverbindungsabschnitt 16, eine Rohrlängsachse 27 und einen Rohrinnenraum 28 aufweisenden Isolationsrohr 17 bereitgestellt. Der Stromleiter 8 ist im Rohrinnenraum 28 angeordnet. In einem zweiten Verfahrensschritt 200 wird eine erfindungsgemäße elektrische Koppelvorrichtung 1 bereitgestellt. In einem dritten Verfahrensschritt 300 wird der erste elektrische Leiterabschnitt 6 der elektrischen Leitervorrichtung 5 der elektrischen Koppelvorrichtung 1 mit dem elektrischen Leiterverbindungsabschnitt 7 zusammengeführt und elektrisch sowie mechanisch verbunden.

In einem vierten Verfahrensschritt 400 wird der erste mechanische Verbindungsabschnitt 15 der mechanischen Anschlussvorrichtung 14 der elektrischen Koppelvorrichtung 1 mit dem Rohrverbindungsabschnitt 16 zusammengeführt sowie mechanisch verbunden, beispielsweise durch Verschweißen. In einem fünften Verfahrensschritt 500 wird der zweite elektrische Leiterabschnitt 9 der elektrischen Leitervorrichtung 5 mit einem in einem Anlagengehäuse 20 der elektrischen Anlage 4 angeordneten elektrischen Anlagenverbindungsabschnitt 10 der elektrischen Anlage 4 zusammengeführt und elektrisch sowie vorzugsweise mechanisch verbunden. In einem sechsten Verfahrensschritt 600 wird der zweite mechanische Verbindungsabschnitt 18 der mechanischen Anschlussvorrichtung 14 mit einem Gehäuseanbindungsabschnitt 19 des Anlagengehäuses 20 mechanisch verbunden. Auf diese Weise ist eine elektrische sowie mechanische Kopplung der Stromleitungsvorrichtung 2 mit der elektrischen Anlage 4 hergestellt.

### Bezugszeichenliste

- 1: elektrische Koppelvorrichtung
- 2: Stromleitungsvorrichtung
- 3: elektrisches System
- 4: elektrische Anlage
- 5: elektrische Leitervorrichtung
- 6: erster elektrischer Leiterabschnitt
- 7: elektrischer Leiterverbindungsabschnitt
- 8: Stromleiter
- 9: zweiter elektrischer Leiterabschnitt
- 10: elektrischer Anlagenverbindungsabschnitt
- 11: Verbindungsleiter
- 12: Isolierkonus
- 13: zentrale Durchführung
- 14: mechanische Anschlussvorrichtung
- 15: erster mechanischer Verbindungsabschnitt
- 16: Rohrverbindungsabschnitt
- 17: Isolationsrohr
- 18: zweiter mechanischer Verbindungsabschnitt
- 19: Gehäuseanbindungsabschnitt
- 20: Anlagengehäuse
- 21: Gewinde
- 22: Gegengewinde
- 23: Formschlussabschnitt
- 24: Gegenformschlussabschnitt
- 25: Haltevorrichtung
- 26: Gehäuseflansch
- 27: Rohrlängsachse
- 28: Rohrinnenraum
- 29: Freiluftdurchführung

- 100: erster Verfahrensschritt
- 200: zweiter Verfahrensschritt
- 300: dritter Verfahrensschritt
- 400: vierter Verfahrensschritt
- 500: fünfter Verfahrensschritt
- 600: sechster Verfahrensschritt

## Patentansprüche

1. Elektrische Koppelvorrichtung (1) zum elektrischen sowie mechanischen Koppeln einer Stromleitungsvorrichtung (2) eines elektrischen Systems (3) mit einer elektrischen Anlage (4) des elektrischen Systems (3), aufweisend eine elektrische Leitervorrichtung (5) mit einem ersten elektrischen Leiterabschnitt (6) zum elektrischen Verbinden mit einem elektrischen Leiterverbindungsabschnitt (7) eines Stromleiters (8) der Stromleitungsvorrichtung (2) sowie einem zweiten elektrischen Leiterabschnitt (9) zum elektrischen Verbinden mit einem elektrischen Anlagenverbindungsabschnitt (10) der elektrischen Anlage (4),
wobei die elektrische Leitervorrichtung (5) zum elektrischen Koppeln des ersten elektrischen Leiterabschnitts (6) mit dem zweiten elektrischen Leiterabschnitt (9) einen Verbindungsleiter (11) aufweist, einen Isolierkonus (12) mit einer zentralen Durchführung (13),
wobei ein Teilbereich der elektrischen Leitervorrichtung (5) in der zentralen Durchführung (13) angeordnet ist, sowie eine mechanische Anschlussvorrichtung (14) mit einem ersten mechanischen Verbindungsabschnitt (15) zum mechanischen Verbinden mit einem Rohrverbindungsabschnitt (16) eines Isolationsrohrs (17) der Stromleitungsvorrichtung (2) und einem zweiten mechanischen Verbindungsabschnitt (18) zum mechanischen Verbinden mit einem Gehäuseanbindungsabschnitt (19) eines Anlagengehäuses (20) der elektrischen Anlage (4),
**dadurch gekennzeichnet, dass**
der erste mechanische Verbindungsabschnitt (15) zum Verschweißen mit dem Rohrverbindungsabschnitt (16) ausgebildet ist, wobei der erste mechanische Verbindungsabschnitt (15) einen Thermoplast aufweist oder aus einem Thermoplast gebildet ist.

2. Elektrische Koppelvorrichtung (1) nach Anspruch 1,
**dadurch gekennzeichnet, dass**
der erste elektrische Leiterabschnitt (6) ein Gewinde (21) zum Zusammenschrauben mit einem Gegengewinde (22) des elektrischen Leiterverbindungsabschnitts (7) aufweist.

3. Elektrische Koppelvorrichtung (1) nach Anspruch 1 oder 2,
**dadurch gekennzeichnet, dass**
der zweite elektrische Leiterabschnitt (9) einen Formschlussabschnitt (23) zum formschlüssigen Zusammenstecken mit einem Gegenformschlussabschnitt (24) des elektrischen Anlagenverbindungsabschnitts (10) aufweist.

4. Elektrische Koppelvorrichtung (1) nach einem der vorangegangenen Ansprüche,
**dadurch gekennzeichnet, dass**
der Verbindungsleiter (11) über eine Haltevorrichtung (25) am Isolierkonus (12) gehalten ist.

5. Elektrische Koppelvorrichtung (1) nach einem der vorangegangenen Ansprüche,
**dadurch gekennzeichnet, dass**
der zweite elektrische Leiterabschnitt (9) die zentrale Durchführung (13) verschließt.

6. Elektrische Koppelvorrichtung (1) nach einem der vorangegangenen Ansprüche,
**dadurch gekennzeichnet, dass**
der erste mechanische Verbindungsabschnitt (15) integral mit dem Isolierkonus (12) ausgebildet ist.

7. Elektrische Koppelvorrichtung (1) nach einem der vorangegangenen Ansprüche,
**dadurch gekennzeichnet, dass**
der zweite mechanische Verbindungsabschnitt (18) zum Anflanschen an einem Gehäuseflansch (26) des Gehäuseanbindungsabschnitts (19) ausgebildet ist.

8. Elektrisches System (3),
aufweisend eine elektrische Anlage (4) mit einem elektrischen Anlagenverbindungsabschnitt (10) und einem Anlagengehäuse (20) mit einem Gehäuseanbindungsabschnitt (19), eine Stromleitungsvorrichtung (2) mit einem einen elektrischen Leiterverbindungsabschnitt (7) aufweisenden Stromleiter (8) und einem einen Rohrverbindungsabschnitt (16), eine Rohrlängsachse (27) und einen Rohrinnenraum (28) aufweisenden Isolationsrohr (17),
wobei der Stromleiter (8) im Rohrinnenraum (28) angeordnet ist, sowie eine elektrische Koppelvorrichtung (1) nach einem der vorangegangenen Patentansprüche,
wobei der erste elektrische Leiterabschnitt (6) der elektrischen Leitervorrichtung (5) der elektrischen Koppelvorrichtung (1) mit dem elektrischen Leiterverbindungsabschnitt (7) elektrisch verbunden ist, und
wobei der erste mechanische Verbindungsabschnitt (15) der elektrischen Koppelvorrichtung (1) mit dem Rohrverbindungsabschnitt (16) mechanisch verbunden ist.

9. Verfahren zum elektrischen sowie mechanischen Koppeln einer Stromleitungsvorrichtung (2) eines elektrischen Systems (3) mit einer elektrischen Anlage (4) des elektrischen Systems (3), aufweisend die folgenden Schritte:
- Bereitstellen einer Stromleitungsvorrichtung (2) mit einem einen elektrischen Leiterverbindungsabschnitt (7) aufweisenden Stromleiter (8) und einem einen Rohrverbindungsabschnitt (16), eine Rohrlängsachse (27) und einen Rohrinnenraum (28) aufweisenden Isolationsrohr (17), wobei der Stromleiter (8) im Rohrinnenraum (28) angeordnet ist,
- Bereitstellen einer elektrischen Koppelvorrichtung (1) nach einem der Ansprüche 1 bis 7,
- Zusammenführen und elektrisches Verbinden des ersten elektrischen Leiterabschnitts (6) der elektrischen Leitervorrichtung (5) der elektrischen Koppelvorrichtung (1) mit dem elektrischen Leiterverbindungsabschnitt (7),
- Zusammenführen und mechanisches Verbinden des ersten mechanischen Verbindungsabschnitts (15) der mechanischen Anschlussvorrichtung (14) der elektrischen Koppelvorrichtung (1) mit dem Rohrverbindungsabschnitt (16),
- Zusammenführen und elektrisches Verbinden des zweiten elektrischen Leiterabschnitts (9) der elektrischen Leitervorrichtung (5) mit einem in einem Anlagengehäuse (20) der elektrischen Anlage (4) angeordneten elektrischen Anlagenverbindungsabschnitt (10) der elektrischen Anlage (4), und
- Mechanisches Verbinden des zweiten mechanischen Verbindungsabschnitts (18) der mechanischen Anschlussvorrichtung (14) mit einem Gehäuseanbindungsabschnitt (19) des Anlagengehäuses (20) .

## Claims

1. Electrical coupling device (1) for electrically and mechanically coupling a power conducting device (2) of an electrical system (3) to an electrical installation (4) of the electrical system (3), comprising an electrical conductor device (5) having a first electrical conductor portion (6) for electrical connection to an electrical conductor connecting portion (7) of a power conductor (8) of the power conducting device (2) and also having a second electrical conductor portion (9) for electrical connection to an electrical installation connecting portion (10) of the electrical installation (4), wherein the electrical conductor device (5) has a connecting conductor (11) for electrically coupling the first electrical conductor portion (6) to the second electrical conductor portion (9), comprising an insulating cone (12) having a central bushing (13),
wherein a subregion of the electrical conductor device (5) is arranged in the central bushing (13), and also comprising a mechanical connection device (14) having a first mechanical connecting portion (15) for mechanical connection to a pipe connecting portion (16) of an insulation pipe (17) of the power conducting device (2) and having a second mechanical connecting portion (18) for mechanical connection to a housing joining portion (19) of an installation housing (20) of the electrical installation (4),
**characterized in that**
the first mechanical connecting portion (15) is designed for welding to the pipe connecting portion (16), wherein the first mechanical connecting portion (15) contains a thermoplastic or is formed from a thermoplastic.

2. Electrical coupling device (1) according to Claim 1, **characterized in that**
the first electrical conductor portion (6) has a thread (21) for being screwed together with a mating thread (22) of the electrical conductor connecting portion (7).

3. Electrical coupling device (1) according to Claim 1 or 2, **characterized in that**
the second electrical conductor portion (9) has an interlocking portion (23) for interlocking plug-connection with a mating interlocking portion (24) of the electrical installation connecting portion (10).

4. Electrical coupling device (1) according to any of the preceding claims,
**characterized in that**
the connecting conductor (11) is held on the insulating cone (12) by means of a holding device (25).

5. Electrical coupling device (1) according to any of the preceding claims,
**characterized in that**
the second electrical conductor portion (9) closes the central bushing (13).

6. Electrical coupling device (1) according to any of the preceding claims,
**characterized in that**
the first mechanical connecting portion (15) is integrally formed with the insulating cone (12).

7. Electrical coupling device (1) according to any of the preceding claims,
**characterized in that**
the second mechanical connecting portion (18) is designed to be flange-connected to a housing flange (26) of the housing joining portion (19).

8. Electrical system (3)
comprising an electrical installation (4) having an electrical installation connecting portion (10) and having an installation housing (20) with a housing joining portion (19), comprising a power conducting device (2) having a power conductor (8) comprising an electrical conductor connecting portion (7) and having an insulation pipe (17) comprising a pipe connecting portion (16), a pipe longitudinal axis (27) and a pipe interior (28),
wherein the power conductor (8) is arranged in the pipe interior (28), and also comprising an electrical coupling device (1) according to any of the preceding patent claims,
wherein the first electrical conductor portion (6) of the electrical conductor device (5) of the electrical coupling device (1) is electrically connected to the electrical conductor connecting portion (7), and
wherein the first mechanical connecting portion (15) of the electrical coupling device (1) is mechanically connected to the pipe connecting portion (16).

9. Method for electrically and mechanically coupling a power conducting device (2) of an electrical system (3) to an electrical installation (4) of the electrical system (3), comprising the following steps:
- providing a power conducting device (2) having a power conductor (8) comprising an electrical conductor connecting portion (7) and having an insulation pipe (17) comprising a pipe connecting portion (16), a pipe longitudinal axis (27) and a pipe interior (28), wherein the power conductor (8) is arranged in the pipe interior (28),
- providing an electrical coupling device (1) according to any of Claims 1 to 7,
- bringing together and electrically connecting the first electrical conductor portion (6) of the electrical conductor device (5) of the electrical coupling device (1) with/to the electrical conductor connecting portion (7),
- bringing together and mechanically connecting the first mechanical connecting portion (15) of the mechanical connection device (14) of the electrical coupling device (1) with/to the pipe connecting portion (16),
- bringing together and electrically connecting the second electrical conductor portion (9) of the electrical conductor device (5) with/to an electrical installation connecting portion (10) of the electrical installation (4), the electrical installation connecting portion being arranged in an installation housing (20) of the electrical installation (4), and
- mechanically connecting the second mechanical connecting portion (18) of the mechanical connection device (14) to a housing joining portion (19) of the installation housing (20).

## Revendications

1. Dispositif (1) de connexion électrique pour la connexion électrique ainsi que mécanique d'un dispositif (2) de conduction du courant d'un système (3) électrique à une installation (4) électrique du système (3) électrique, comportant un dispositif (5) à conducteur électrique ayant une première partie (6) de conducteur électrique pour la connexion électrique à une partie (7) de liaison de conducteur électrique d'un conducteur (8) de courant du dispositif (2) de conduction du courant, ainsi qu'une deuxième partie (9) de conducteur électrique pour la connexion électrique à une partie (10) de connexion d'installation électrique de l'installation (4) électrique,
dans lequel le dispositif (5) à conducteur électrique a, pour la connexion électrique de la première partie (6) de conducteur électrique à la deuxième partie (9) de conducteur électrique, un conducteur (11) de connexion, un cône (12) isolant ayant une traversée (13) centrale,
dans lequel une zone partielle du dispositif (5) à conducteur électrique est disposée dans la traversée (13) centrale, ainsi qu'un dispositif (14) de raccordement mécanique ayant une première partie (15) d'assemblage mécanique pour l'assemblage mécanique avec une partie (16) d'assemblage d'un tube (17) isolant du dispositif (2) de conduction du courant et avec une deuxième partie (18) d'assemblage mécanique pour l'assemblage mécanique avec une partie (19) de liaison d'une enveloppe (20) de l'installation (4) électrique,
**caractérisé en ce que**
la première partie (15) d'assemblage mécanique est constituée pour le soudage à la partie (16) d'assemblage d'un tube, dans lequel la première partie (15) d'assemblage mécanique comporte une matière thermoplastique ou en est constituée.

2. Dispositif (1) de connexion électrique suivant la revendication 1,
**caractérisé en ce que**
la première partie (6) de conducteur électrique a un filetage (21) de vissage à un contre-filetage (22) de la partie (7) de liaison de conducteur électrique.

3. Dispositif (1) de connexion électrique suivant la revendication 1 ou 2,
**caractérisé en ce que**
la deuxième partie (9) de conducteur électrique a une partie (23) à complémentarité de forme pour l'enfichage à complémentarité de forme avec une partie (24) à contre-complémentarité de forme de la partie (10) de connexion d'installation électrique.

4. Dispositif (1) de connexion électrique suivant l'une des revendications précédentes,
**caractérisé en ce que**
le conducteur (11) de connexion est maintenu sur le cône (12) isolant par un dispositif (25) de maintien.

5. Dispositif (1) de connexion électrique suivant l'une des revendications précédentes,
**caractérisé en ce que**
la deuxième partie (9) de conducteur électrique ferme la traversée (13) centrale.

6. Dispositif (1) de connexion électrique suivant l'une des revendications précédentes,
**caractérisé en ce que**
la première partie (15) d'assemblage mécanique est constituée d'un seul tenant avec le cône (12) isolant.

7. Dispositif (1) de connexion électrique suivant l'une des revendications précédentes,
**caractérisé en ce que**
la deuxième partie (18) d'assemblage mécanique est constituée pour se brider à une bride (26) de l'enveloppe de la partie (19) de liaison d'enveloppe.

8. Système (3) électrique,
comportant une installation (4) électrique ayant une partie (10) de liaison d'installation électrique et une enveloppe (20) d'installation ayant une partie (19) de liaison d'enveloppe, un dispositif (2) de conduction du courant ayant un conducteur (8) de courant et un tube (17) isolant comportant une partie (7) de liaison de conducteur électrique, un tube (17) isolant comportant une partie (16) d'assemblage de tube, un axe (27) longitudinal de tube et un espace (28) intérieur de tube,
dans lequel le conducteur (8) de courant est disposé dans l'espace (28) intérieur du tube ainsi qu'un dispositif (1) de connexion électrique suivant l'une des revendications précédentes, dans lequel la première partie (6) de conducteur électrique du dispositif (5) à conducteur électrique du dispositif (1) de connexion électrique est connectée électriquement à la partie (7) de liaison de conducteur électrique, et
dans lequel la première partie (15) d'assemblage mécanique du dispositif (1) de connexion électrique est reliée mécaniquement à la partie (16) d'assemblage de tube.

9. Procédé d'accouplement électrique ainsi que mécanique d'un dispositif (2) de conduction du courant d'un système (3) électrique à une installation (4) électrique du système (3) électrique, comportant les stades suivants :
- on se procure un dispositif (2) de conduction du courant ayant un conducteur (8) de courant comportant une partie (7) de liaison de conducteur électrique et un tube (17) isolant comportant une partie (16) d'assemblage de tube, un axe (27) longitudinal de tube et un espace (28) intérieur de tube, dans lequel le conducteur (8) de courant est disposé dans l'espace (28) intérieur de tube,
- on se procure un dispositif (1) de connexion électrique suivant l'une des revendications 1 à 7,
- on réunit et on connecte électriquement la première partie (6) de conducteur électrique du dispositif (5) à conducteur électrique du dispositif (1) de connexion électrique à la partie (7) de liaison de conducteur électrique,
- on réunit et on assemble mécaniquement la première partie (15) d'assemblage mécanique du dispositif (14) de raccordement mécanique du dispositif (1) de connexion électrique à la partie (16) d'assemblage de tube,
- on réunit et on connecte électriquement la deuxième partie (9) de conducteur électrique du dispositif (5) à conducteur électrique à une partie (10) de connexion d'installation (4) électrique disposée dans une enveloppe (20) de l'installation (4) électrique, et
- on assemble mécaniquement la deuxième partie (18) d'assemblage mécanique du dispositif (14) de raccordement mécanique à une partie (19) de liaison de l'enveloppe (20) de l'installation.
